# EUROPEAN PATENT APPLICATION

(11) **EP 4 733 135 A2**
(43) Date of publication of application: **29.04.2026**
(21) Application number: 26154445.6
(22) Date of filing: 03.04.2023
(51) Int. Cl.: B60N 2/36

(54) **HIGH LATCH ASSEMBLY WITH DISC RECLINER**

(30) Priority: 01.04.2022 US 202263326495 P
(62) Divisional of application: 23718959.2
(71) Applicant: Magna Seating Inc., Aurora, Ontario L4G 7K1 (CA)
(72) Inventor: Runde, David M., Ortonville, Michigan, 48462 (US)
(74) Representative: Witte, Weller & Partner Patentanwälte mbB

(57) **Abstract**

A seat assembly for use in an automotive vehicle comprises a seat cushion adapted to be coupled to a floor of the vehicle, a seat back pivotably coupled to the seat cushion, a striker adapted to be fixedly secured to a Support wall in the vehicle, a recliner bracket pivotally coupled to the seat back, and a latch assembly pivotally coupled to the recliner bracket and pivotally coupled to the striker. Pivotal movement of the recliner bracket relative to the seat back causes the latch assembly to pivot around the striker and the seat back to pivot relative to the seat cushion between a design position and a full rechne position.

## Description

### CROSS-REFERENCE TO RELATED APPLICATIONS

This application claims priority to U.S. Provisional Application 63/326,495, filed on April 1, 2022, the disclosure of which is hereby incorporated by reference in its entirety.

### FIELD AND BACKGROUND OF THE INVENTION

The present invention relates to a seat assembly for use in an automotive vehicle. More particularly, the invention relates to a high latch assembly for use on a seat assembly having a seat back pivotably coupled to a seat cushion wherein the seat back is selectively movable between an upright design position, a reclined position, and a fold flat position overlying the seat cushion.

### DESCRIPTION OF RELATED ART

Automotive vehicles typically include one or more seat assemblies having a seat cushion and a seat back for supporting a passenger above a vehicle floor. In sedan type or other vehicles, rear seating assemblies are often fixedly secured to the vehicle floor and have limited adjustability due to the limited space within the rear compartment of the vehicle. It is common for these rear seat assemblies to include a seat back coupled to a seat cushion by a pivot assembly for providing selective pivotal folding of the seat back relative to the seat cushion between a use position and a fold flat position overlying the seat cushion to provide additional storage space within the vehicle rear compartment. It is also common to include a recliner assembly operatively coupled between the seat back and the seat cushion to provide selective pivotal adjustment of the seat back between the use position and a rearward reclined position to provide seat occupant comfort. Alternatively, vehicle rear seat assemblies are also known that have a seat back secured to a fixed striker on the vehicle by a high latch. The high latch is selectively decoupled from the fixed striker allowing the seat back to be rotated from an upright position towards a folded position. Certain known seat assemblies are selectively moveable between a use position and a reclined slouch position while the high latch is engaged with the fixed striker.

However, in a sedan type vehicle, the range of motion of the seat back is limited by the high latch coupled to the fixed striker. It is desirable, therefore, to improve the range of motion of the seat back while the high latch is coupled to the striker.

### SUMMARY OF THE INVENTION

According to one embodiment. there is provided a seat assembly for use in an automotive vehicle. The seat assembly comprises a seat cushion adapted to be coupled to a floor of the vehicle, a seat back pivotably coupled to the seat cushion, a striker adapted to be fixedly secured to a support wall in the vehicle, a recliner bracket pivotally coupled to the seat back, and a latch assembly pivotally coupled to the recliner bracket and pivotally coupled to the striker, wherein pivotal movement of the recliner bracket relative to the seat back causes the latch assembly to pivot about the striker and the seat back to pivot relative to the seat cushion between a design position and a full recline position.

According to another embodiment, there is provided a high latch for use in a seat assembly in an automotive vehicle. The high latch comprises a recliner A-bracket, a recliner B-bracket, and a disc recliner operatively coupled between the recliner A-bracket and the recliner B-bracket to pivotally couple the recliner A-bracket to the recliner B-bracket. The disc recliner is selectively repositionable between an unlocked condition wherein the recliner A-bracket is pivotable relative to the recliner B-bracket and a locked condition wherein the recliner A-bracket is pivotally locked to the recliner B-bracket. The high latch also includes a latch assembly pivotally coupled to the recliner A-bracket and adapted to be pivotally coupled to a striker in the automotive vehicle.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a front perspective view of an automotive seat assembly having a high latch, according to one embodiment of the present invention:
Figure 2 is an enlarged front perspective view of a high latch (portion 2) from the seat assembly of Figure 1;
Figure 3 is a cutaway left side view of the high latch of Figure 2;
Figure 4 is a cutaway right side view of the high latch of Figure 3;
Figure 5 is an exploded view of a portion of the high latch of Figure 4;
Figure 6 is an exploded view of another portion of the high latch of Figure 4;
Figure 7 is a cross-sectional view of the high latch of Figure 2 taken along line 7-7;
Figure 8 is a cross-sectional view of the high latch of Figure 2 taken along line 8-8;
Figure 9 is an enlarged view of portion 9 of the high latch of Figure 3 showing engaged wedge profiles between a lower hook, an upper hook, and a locking cam;
Figure 10 is an enlarged view of portion 9 of the high latch of Figure 3 showing engaged locking profiles between the lower and upper hooks and the locking cam;
Figure 11 is a left side view of the seat assembly of Figure 1, showing the seat back in a design position:
Figure 12 is an enlarged left side view of portion 12 of the seat assembly of Figure 11, showing the high latch attached to the striker with the seat back in the design position;
Figure 13 is a left side view of the high latch of Figure 12, showing the high latch attached to the striker and the seat back in a full recline position:
Figure 14 is a right side view of the high latch of Figure 13 with the seat back in the full recline position;
Figure 15 is a left side view of the seat assembly of Figure 11, showing the high latch attached to the striker and the seat back in the full recline position:
Figure 16 is an enlarged cutaway left side view of portion 16 of the seat back in Figure 15;
Figure 17 is a left side view of the high latch of Figure 12, showing the lower and upper hooks engaged with the striker;
Figure 18 is a left side view of the high latch of Figure 17, showing the lower and upper hooks partially disengaged from the striker;
Figure 19 is a left side view of the high latch of Figure 12, showing the lower and upper hooks fully disengaged from the striker;
Figure 20 is a left side view of the high latch of Figure 19, showing the high latch spaced apart from the striker;
Figure 21 is a left side view of the seat assembly of Figure 15, showing the seat back in a fold flat position:
Figure 22 is a left side view of the high latch of Figure 20, showing the high latch making first contact with the striker:
Figure 23 is a left side view of the high latch of Figure 22, showing the lower and upper hooks in contact with the striker:
Figure 24 is a left side view of the high latch of Figure 23, showing the lower and upper hooks bypassing the striker; and
Figure 25 is a left side view of the high latch of Figure 24, showing the high latch coupled to the striker.

### DETAILED DESCRIPTION OF THE INVENTION

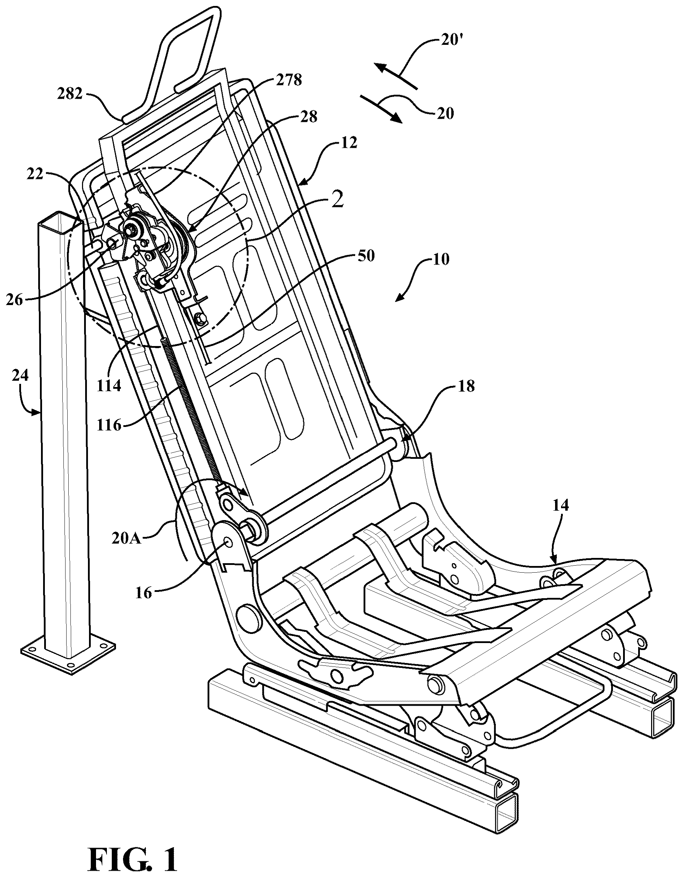

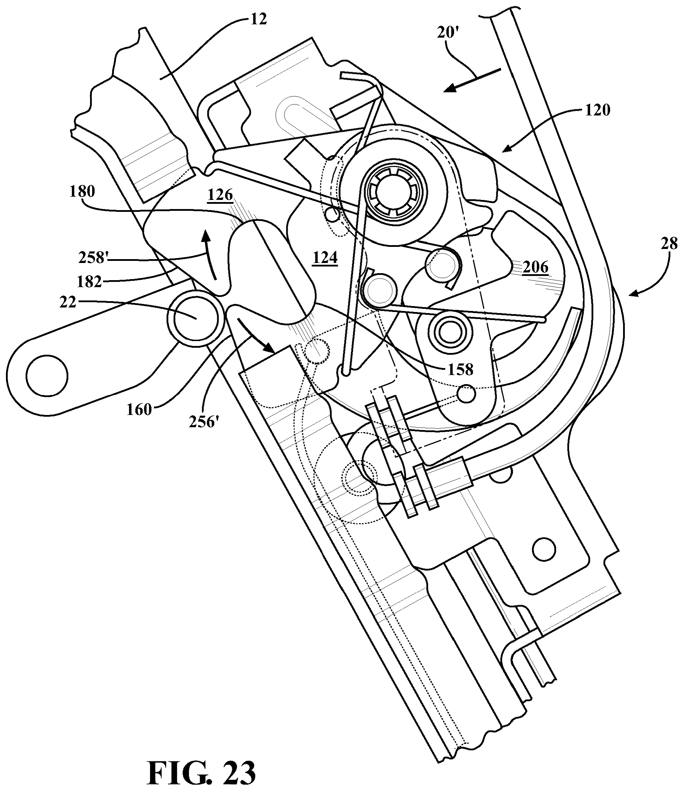

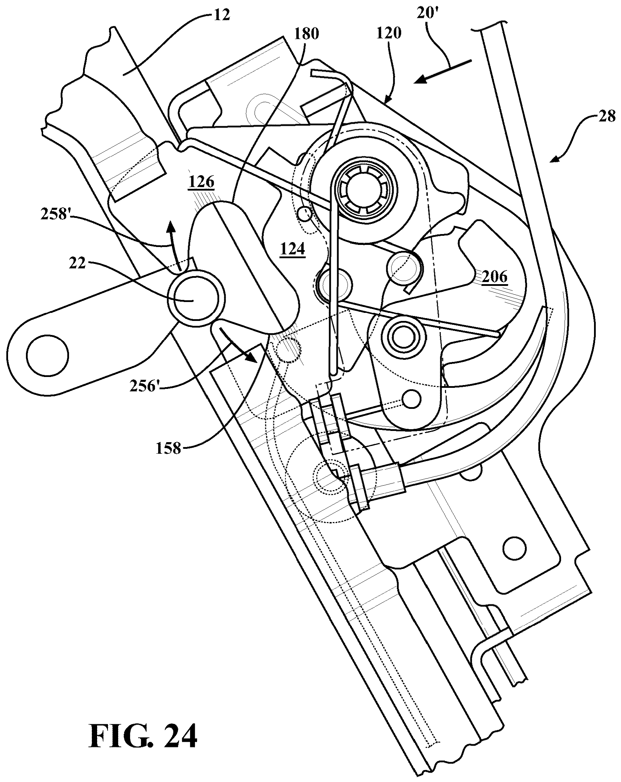

Figures 1-25 illustrate a seat assembly 10 for use in an automotive vehicle according to embodiments described herein. Directional references employed or shown in the description, figures, or claims, such as top, bottom, upper, lower, upward, downward, lengthwise, widthwise, left, right, and the like, are relative terms employed for ease of description and are not intended to limit the scope of the invention in any respect. Referring to the Figures, like numerals indicate like or corresponding parts throughout the several views.

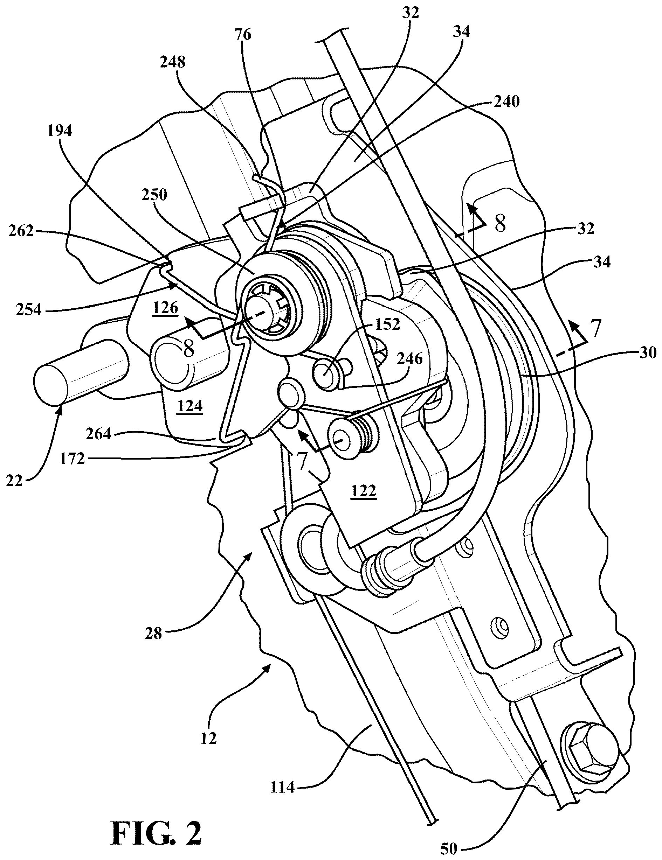

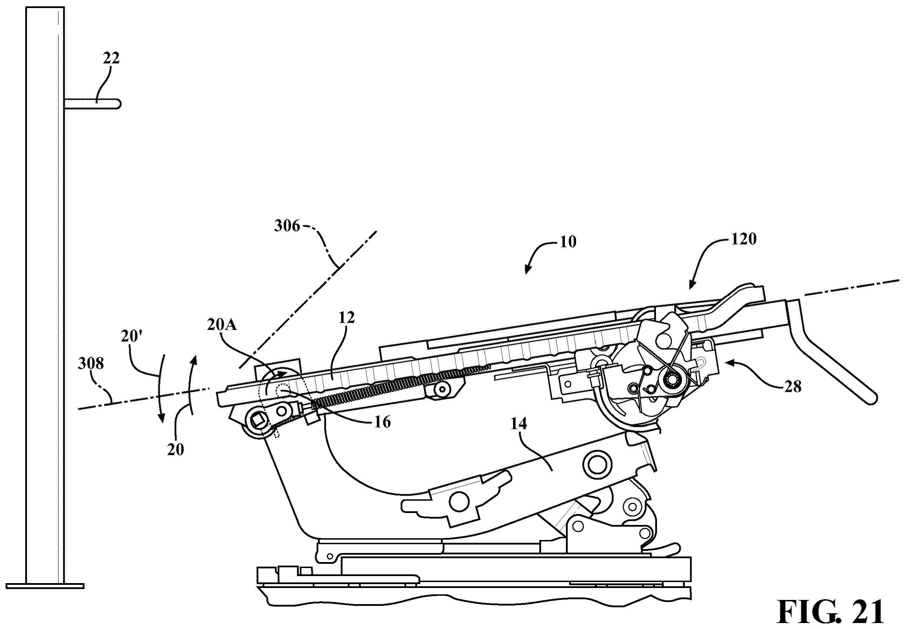

As depicted in Figure 1, the seat assembly 10 includes a seat back 12 and a seat cushion 14. Figure 1 illustrates the seat assembly 10 in a design position, or generally upright seating position. The seat back 12 is rotatably coupled to the seat cushion 14 by opposing free pivots 16. The seat assembly 10 may include a seat back spring 18 operatively coupled between the seat back 12 and the seat cushion 14. The seat back spring 18 applies a forward-biasing force 20A to rotationally bias the seat back 12 in a forward direction (arrow 20) around the free pivots 16 towards a fold flat position (Figure 21) with the seat back 12 overlying the seat cushion 14. Referring to Figures 1 and 2, the seat assembly 10 also includes a striker 22 attached to a support wall 24 behind the seat back 12. The striker 22 is generally U-shaped and includes a horizontal elongated striker portion 26. It should be appreciated that the shape and structure of the striker 22 can vary without departing from the scope of the present invention.

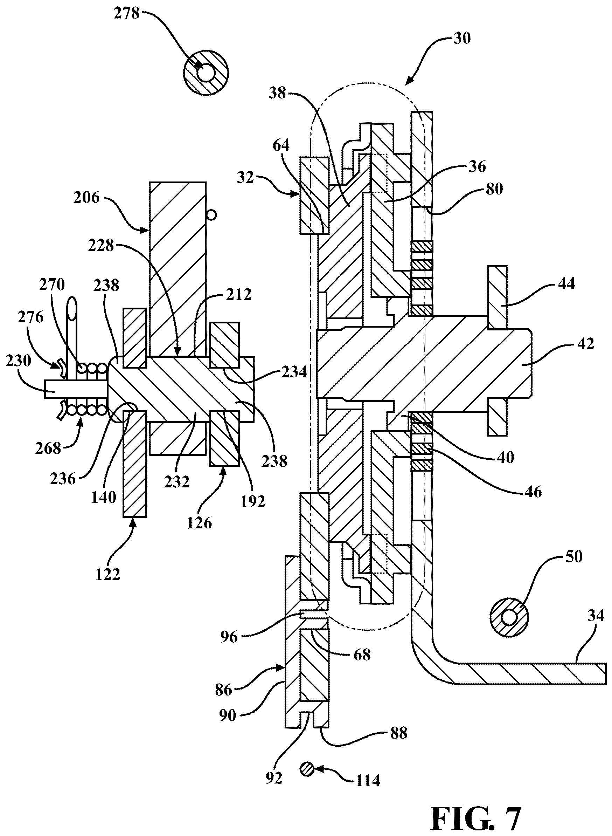

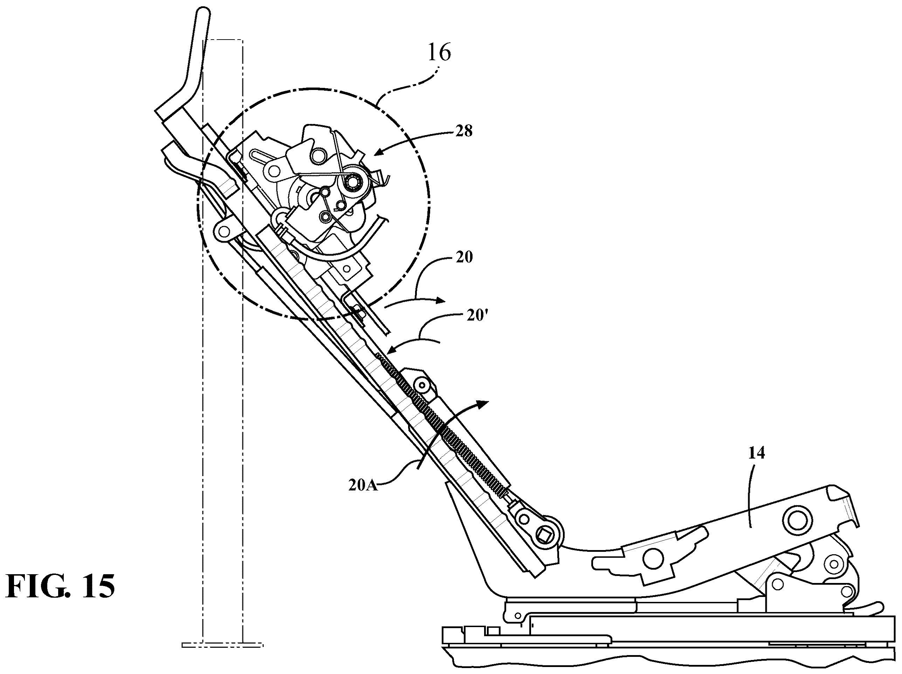

Referring to Figures 1-5, the seat assembly 10 further includes a high latch assembly 28 (hereinafter, "high latch") pivotably coupled to the seat back 12 and configured to selectively couple to the striker 22. In addition, the high latch 28 allows the seat back 12 to be repositioned between the design position (Figure 1) and a full recline position (Figure 15), with the seat back 12 further reclined or angled from the upright seating position, while the high latch 28 is coupled to the striker 22. Referring to Figures 2-5, the high latch 28 includes a locked pivot comprising a disc recliner 30 mounted to a recliner A-bracket 32 and a recliner B-bracket 34 to allow the recliner A-bracket 32 to rotate relative to the recliner B-bracket 34. Depicted in Figure 7, the disc recliner 30 includes a guide plate 36, a tooth plate 38, a cam 40, a recliner shaft 42, recliner pawls (not shown), a release lever 44 and a recliner spring 46. The guide plate 36 is rotatably coupled to the tooth plate 38, the cam 40 is operatively coupled to the recliner pawls which in turn are operatively coupled to both the guide plate 36 and the tooth plate 38. The cam 40 rotates between a locked condition, where the recliner pawls prevent the tooth plate 38 from rotating relative to the guide plate 36, and an unlocked condition. where the recliner pawls allow the guide plate 36 to rotate relative to the tooth plate 38. The recliner shaft 42 is fixedly coupled to the cam 40 and fixedly coupled to the release lever 44. In addition, the recliner spring 46 is operatively coupled between the recliner shaft 42 and the guide plate 36 to bias the cam 40 towards the locked condition.

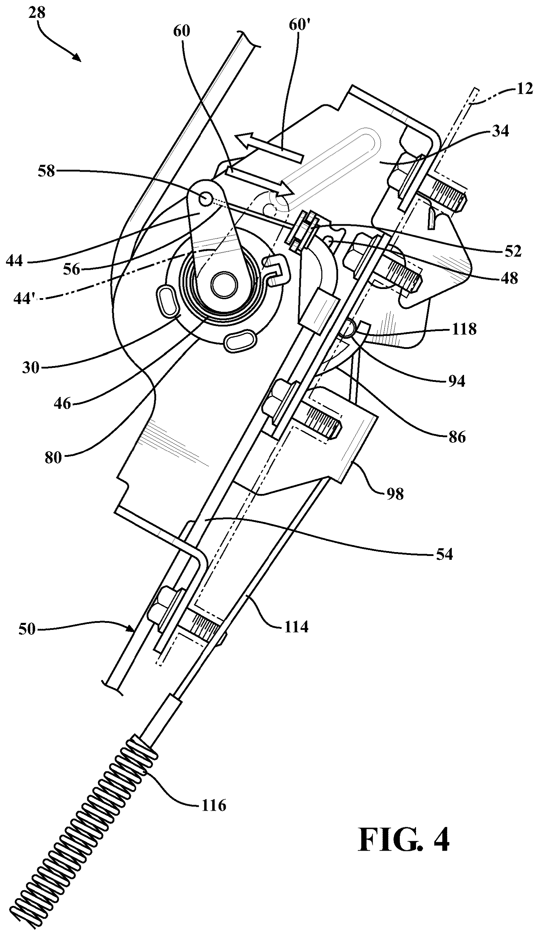

Depicted in Figure 4, the high latch 28 also includes a cable bracket 48 fixedly coupled to the recliner B-bracket 34. In addition, the high latch 28 includes a disc release cable assembly 50 operatively coupled between the release lever 44 and an adjustment lever (not shown) and configured to apply tension to the release lever 44 to unlock the disc recliner 30 upon activation of the adjustment lever. The disc release cable assembly 50 includes an end fitting 52 fixedly coupled to a proximal end of a cable conduit 54 and fixedly coupled to the cable bracket 48. The disc release cable assembly 50 also includes a disc release cable 56 (i.e., a Bowden cable) extending longitudinally through the cable conduit 54, through a hole (not shown) in the end fitting 52, and having a cable end 58 fixedly coupled to the release lever 44. Applying tension to the disc release cable 56 (arrow 60) causes the release lever 44 to rotate to an actuated position (shown as release lever 44') which causes the recliner shaft 42 to rotate the cam 40 into the unlocked condition. When the release lever 44 is released (arrow 60'), the recliner spring 46 forces the cam 40 back to the locked condition. An exemplary disc recliner 30 is further described in PCT publication WO/2020/154590, the disclosure of which is hereby incorporated by reference.

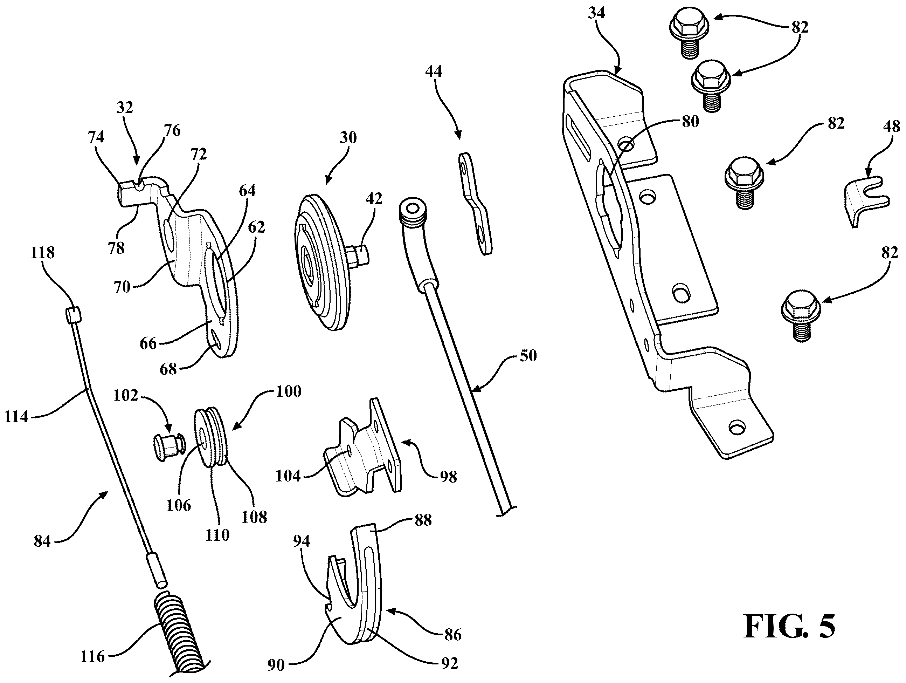

Referring to Figure 5, the recliner A-bracket 32 includes a generally ring-shaped base portion 62 having a recliner hole 64 extending laterally therethrough and a guide tab 66 extending radially from a lower portion of the base portion 62. The guide tab 66 includes a tab slot 68 extending laterally therethrough. The recliner A-bracket 32 also includes a pivot flange 70 extending radially from the base portion 62 with the pivot flange 70 being offset laterally from the base portion 62. In addition, the pivot flange 70 includes a pivot hole 72 extending laterally therethrough. Further, the recliner A-bracket 32 includes a bent tab 74 extending at generally a right angle from the pivot flange 70 and having a retention slot 76 in an upper side wall. The bent tab 74 also includes a lower side wall defining a hook rotation hard stop 78, the purpose of which is further described below.

Referring to Figures 4, 5, and 7, the tooth plate 38 of the disc recliner 30 is mounted to the recliner hole 64 in the recliner A-bracket 32. In addition, the guide plate 36 is mounted into a laterally facing mounting hole 80 in the recliner B-bracket 34, which is fixedly coupled to the seat back 12 by attachment bolts 82. The recliner A-bracket 32 is rotatable relative to the recliner B-bracket 34 when the disc recliner 30 is in the unlocked condition. In contrast, the recliner A-bracket 32 is rotationally locked to the recliner B-bracket 34 when the disc recliner 30 is in the locked condition.

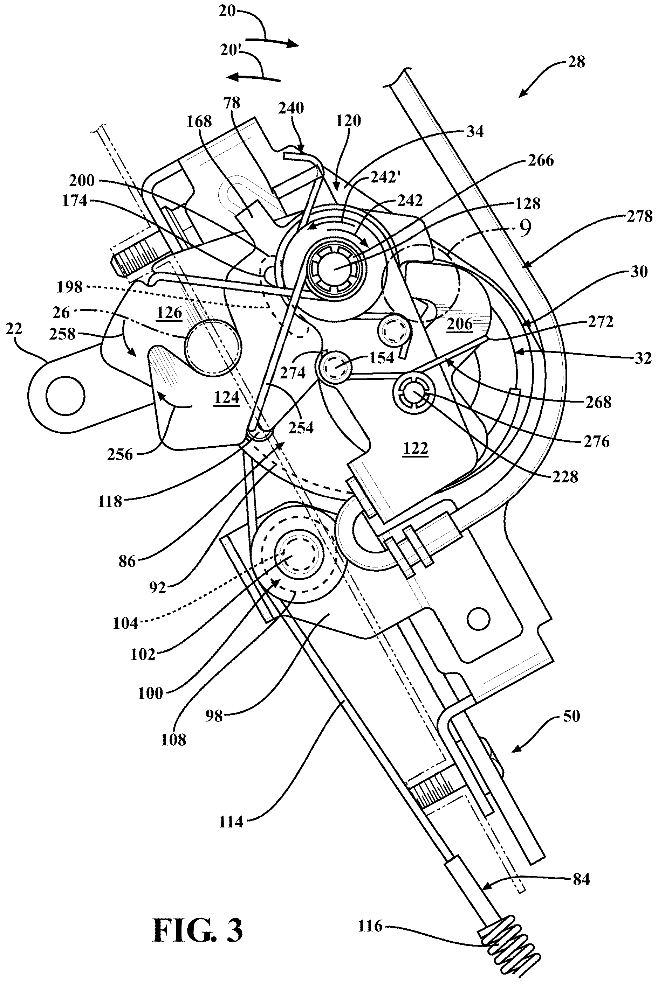

Referring to Figure 3, the high latch 28 also includes a fold flat release cable assembly 84 operatively coupled between the recliner A-bracket 32 and the recliner B-bracket 34 to bias the recliner A-bracket 32 in a rearward direction (arrow 20') towards an upright rotational position (Figure 3). Referring to Figures 5 and 7. the fold flat release cable assembly 84 includes a cammed guide 86 fixedly coupled to the recliner A-bracket 32. The cammed guide 86 and recliner A-bracket 32 rotate together relative to the recliner B-bracket 34. The cammed guide 86 includes an arcuate-shaped side wall 88 extending laterally from a face plate 90 and having a guide groove 92 extending circumferentially along the side wall 88. The face plate 90 includes a stop sleeve slot 94 near one end and laterally-projecting attachment tabs 96. The cammed guide 86 is attached to the recliner A-bracket 32 by inserting the attachment tabs 96 into the tab slot 68. The cammed guide 86 is cammed to allow for consistent force throughout the recline function with the resultant moment decreasing as the disc recliner 30 rotates.

Depicted in Figures 3 and 5, the fold flat release cable assembly 84 also includes a pulley bracket 98, a guide pulley 100. and a rivet 102. The pulley bracket 98 includes a rivet hole 104 extending laterally therethrough and includes a laterally-facing surface fixedly coupled to the recliner B-bracket 34. The guide pulley 100 has a generally cylindrical shape with a pulley hole 106 extending laterally therethrough and a cable groove 108 extending circumferentially around a side wall 110. The guide pulley 100 is pivotally coupled to the pulley bracket 98 by the rivet 102 extending through the pulley hole 106 and fixedly coupled to the rivet hole 104 in the pulley bracket 98.

Depicted in Figures 4 and 5, the fold flat release cable assembly 84 also includes a fold flat cable 114 and an extension spring 116 operatively coupled between the cammed guide 86 and the seat back 12. The fold flat cable 114 has a distal end fixedly coupled to an upper end of the extension spring 116 and a proximal end fixedly coupled to a crossbar stop sleeve 118 which is inserted into the stop sleeve slot 94 in the cammed guide 86. Shown in Figure 1, a lower end of the extension spring 116 is fixedly coupled to the seat back 12. Depicted in Figure 3, the fold flat cable 114 is routed along the guide groove 92 in the cammed guide 86 and along the cable groove 108 in the guide pulley 100.

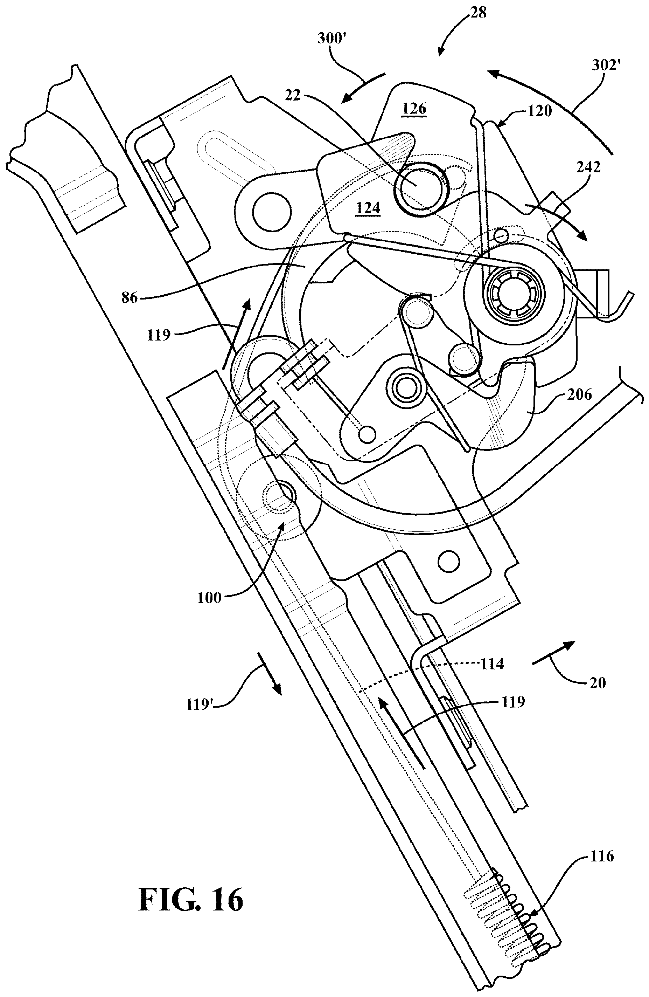

Shown in Figure 16, when seat back 12 is repositioned to the full recline position (Figure 15) from the design position (Figure 1), the fold flat cable 114 pulls the extension spring 116 (arrow 119) as the fold flat cable 114 wraps over the cammed guide 86 which creates a return force 119'. The return force 119' causes the recliner A-bracket 32 to return to the design position when the disc recliner 30 is unlocked. The fold flat release cable assembly 84 is under a preload that is greater than the minimum disc return force when the seat back 12 is in the design position. It will be appreciated that the fold flat release cable assembly 84 may be replaced by other spring configurations, such as a torsion spring, a clock spring, an offset clock spring with a pinion/sector, and the like, without altering the scope of the present invention.

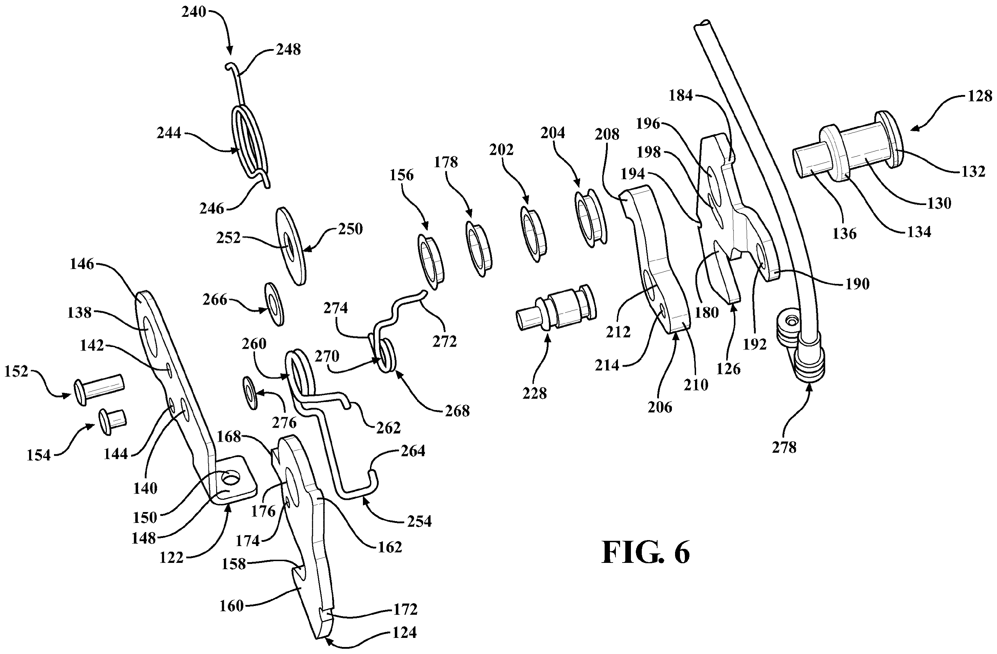

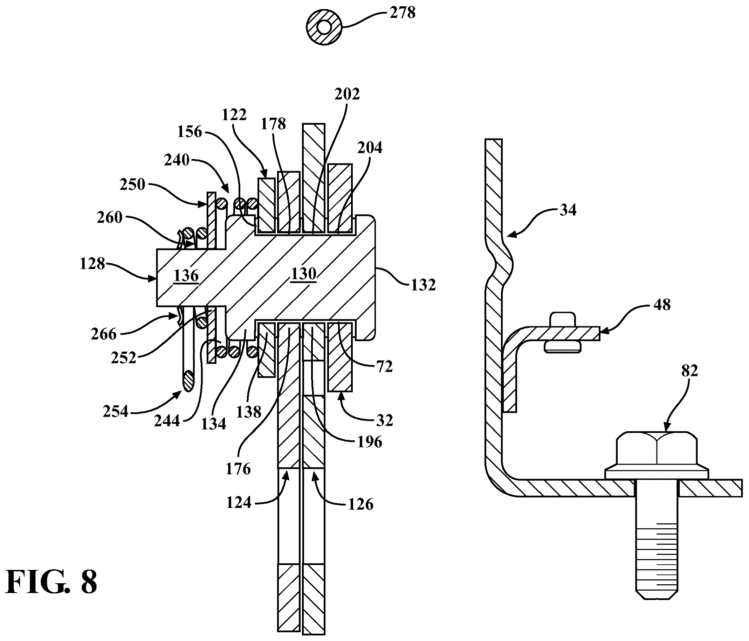

Depicted in Figure 3, the high latch 28 also includes a pivoting latch assembly 120 (hereinafter, "latch assembly") configured to latch and/or unlatch the high latch 28 from the striker 22. The latch assembly 120 includes a latch closeout bracket 122, a lower hook 124, and an upper hook 126 pivotally coupled to the recliner A-bracket 32 by a latch attachment pivot 128. As such, the recliner A-bracket 32 is pivotally connected to the lower and upper hooks 124, 126 by a free pivot. In addition, the lower and upper hooks 124, 126 are pivotally coupled to the striker 22 by another free pivot. As best shown in Figures 6, and 8, the latch attachment pivot 128 (hereinafter, "latch pivot") includes a pivot shaft 130 having a distal end projecting axially from a shaft head 132, a collar 134 extending from a proximal end of the pivot shaft 130, and a spring shaft 136 extending axially from the collar 134. In the embodiment shown in Figure 8, the collar 134 and the shaft head 132 may have an outer diameter greater than an outer diameter of the pivot shaft 130. In addition, the spring shaft 136 may have an outer diameter less than the outer diameter of the pivot shaft 130 and the collar 134.

Depicted in Figure 6, the latch closeout bracket 122 (hereinafter, "closeout bracket") includes a closeout pivot hole 138, a cam pivot hole 140, an upper pin hole 142, and a lower pin hole 144 extending through a laterally facing main portion 146. The closeout bracket 122 also includes a closeout tab 148 extending at a generally right angle from the main portion 146 with a mounting hole 150 extending therethrough. The latch assembly 120 also includes a long pin 152 and a short pin 154 fixedly coupled to the upper and lower pin holes 142, 144, respectively, in the closeout bracket 122. Shown in Figures 6 and 8. the latch assembly 120 also includes a first Norton bushing 156 fixedly coupled to the closeout pivot hole 138 and having a passageway extending therethrough. The closeout bracket 122 is pivotally coupled to the latch pivot 128 with the pivot shaft 130 extending through the closeout pivot hole 138 and through the passageway in the first Norton bushing 156 with the closeout bracket 122 adjacent the collar 134.

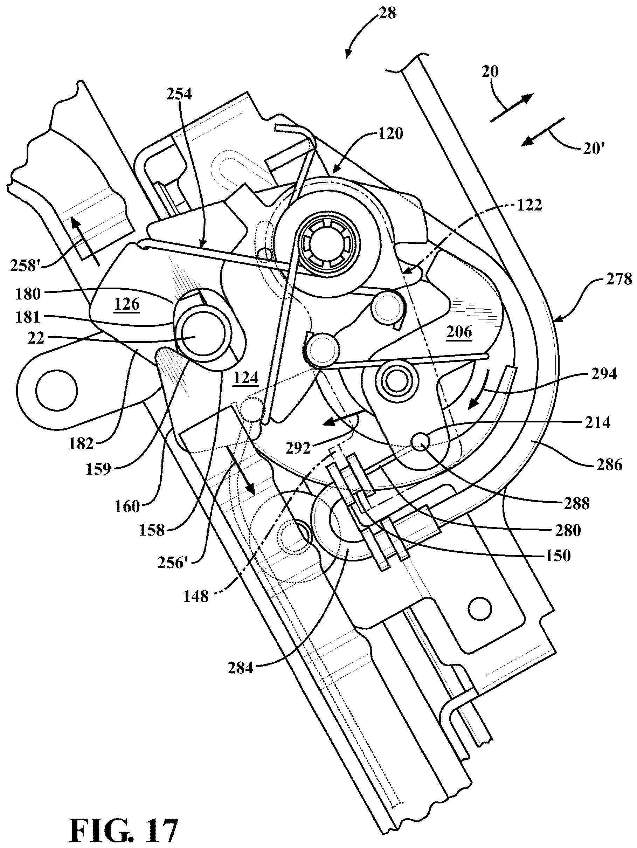

Referring to Figures 3, 6, and 8, the lower hook 124 is pivotally coupled to the latch pivot 128 to move between a latched condition engaged with the striker 22 and an unlatched condition released from the striker 22. The lower hook 124 includes a C-shaped slot 158 configured to matingly engage with the striker 22 when the latch assembly 120 is latched to the striker 22. Depicted in Figure 17, the lower hook 124 includes an inner cam surface 159 extending along a distal portion of the C-shaped slot 158 configured to frictionally engage with the striker 22 as the seat back 12 is pivoted forward (arrow 20) towards the fold flat position (Figure 21). In addition, the lower hook 124 includes an outer cam surface 160 extending along a distal end of the lower hook 124 configured to contact the striker 22 when the seat back 12 is pivoted rearward (arrow 20') from the fold flat position.

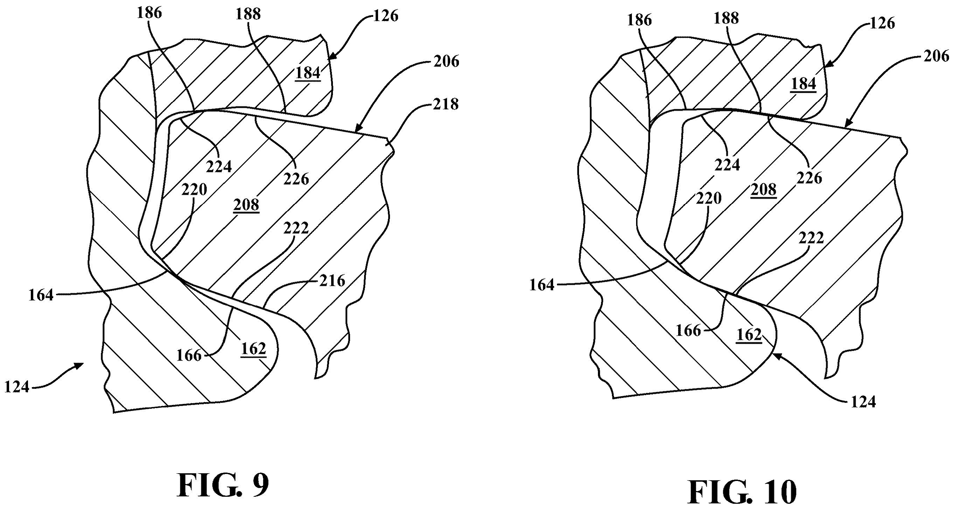

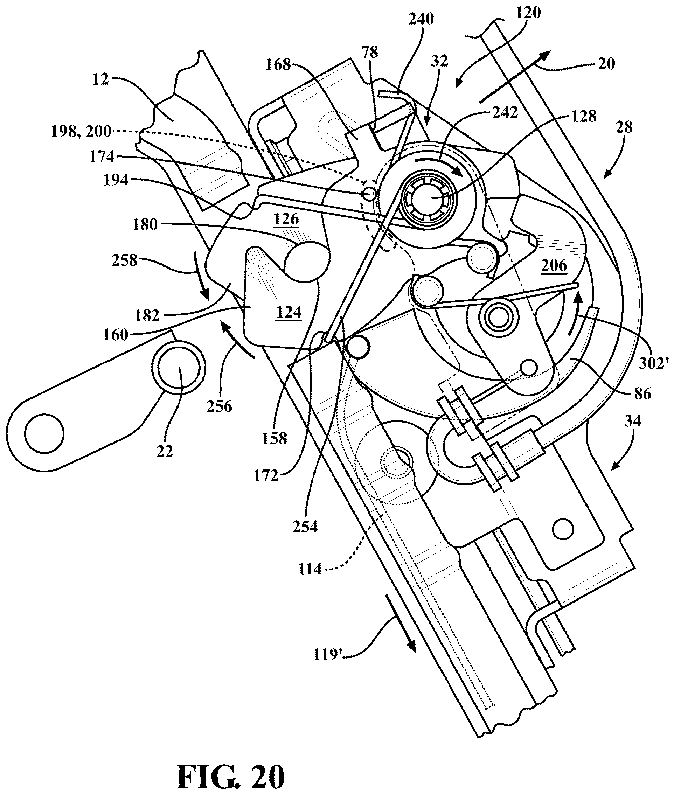

Shown in Figures 6 and 9, the lower hook 124 also includes a locking tab 162 having a lower wedge profile 164 adjacent a lower locking profile 166 extending along an upper side of the locking tab 162. Referring to Figure 20, the lower hook 124 includes a stop tab 168 projecting away from the lower hook 124 configured to frictionally engage with the hook rotation hard stop 78 when the latch assembly 120 is disengaged from the striker 22. The stop tab 168 engaged with the hook rotation hard stop 78 maintains the lower and upper hooks 124, 126 in a proper relative position to cam back open and re-latch to the striker 22 when the seat back 12 returns from the fold flat position (Figure 21). Also shown in Figure 20, the lower hook 124 also includes a lower spring notch 172 in a lower side portion. In addition, the lower hook 124 includes a stop nib 174 projecting laterally from the lower hook 124 towards the upper hook 126. In one embodiment, the stop nib 174 is a half-pierced feature in the lower hook 124. Shown in Figures 6 and 8, the lower hook 124 further includes a lower pivot hole 176 extending therethrough. The latch assembly 120 also includes a second Norton bushing 178 having a passageway extending therethrough and inserted into the lower pivot hole 176. The lower hook 124 is pivotally coupled to the latch pivot 128 with the pivot shaft 130 extending through the lower pivot hole 176 and through the passageway in the second Norton bushing 178 with the closeout bracket 122 spaced between the lower hook 124 and the collar 134.

Depicted in Figures 3, the upper hook 126 is pivotally coupled to the latch pivot 128 to move between a latched condition engaged with the striker 22 and an unlatched condition released from the striker 22. Referring to Figures 6 and 17, the upper hook 126 includes a C-shaped slot 180 configured to matingly engage with the striker 22 when the latch assembly 120 is latched to the striker 22. Depicted in Figure 17, the upper hook 126 includes an inner cam surface 181 extending along a distal portion of the C-shaped slot 180 configured to frictionally engage with the striker 22 as the seat back 12 is pivoted forward (arrow 20) towards the fold flat position (Figure 21). In addition, the upper hook 126 includes an outer cam surface 182 extending along a distal end of the upper hook 126 configured to contact the striker 22 when the seat back 12 is pivoted rearward (arrow 20') from the fold flat position.

Referring to Figures 6 and 9, the upper hook 126 also includes a protrusion 184 extending from an upper portion of the upper hook 126. The protrusion 184 includes an upper wedge profile 186 adjacent an upper locking profile 188 extending along a lower edge. Referring to Figure 6, the upper hook 126 also includes an offset tab 190 having a tab pivot hole 192 extending laterally therethrough. The upper hook 126 also includes an upper spring notch 194 along a rear side portion of the upper hook 126 opposing the C-shaped slot 180. In addition, the upper hook 126 includes an upper pivot hole 196 extending laterally through the upper hook 126. Shown in Figures 3, 6, and 20, the upper hook 126 also includes an arcuate-shaped stop slot 198 configured to align with the stop nib 174 when assembled with the lower hook 124. More specifically, the stop nib 174 and the stop slot 198 are configured such that the stop nib 174 may travel along the stop slot 198 as the lower and upper hooks 124, 126 rotate relative to one another. The stop nib 174 and an upper end of the stop slot 198 define a hook-to-hook hard stop 200, shown in Figure 20. The hook-to-hook hard stop 200 maintains the lower and upper hooks 124, 126 in a proper relative position to cam back open and re-latch to the striker 22 when the seat back 12 returns from the fold flat position (Figure 21).

Referring to Figures 6 and 8, the latch assembly 120 also includes a third Norton bushing 202 having a passageway extending therethrough and inserted into the upper pivot hole 196 in the upper hook 126. The upper hook 126 is pivotally coupled to the latch pivot 128 with the pivot shaft 130 extending through the upper pivot hole 196 and through the passageway in the third Norton bushing 202. The lower hook 124 is spaced between the upper hook 126 and the closeout bracket 122. The latch assembly 120 also includes a fourth Norton bushing 204 inserted into the pivot hole 72 in the recliner A-bracket 32 and having a passageway extending therethrough. The recliner A-bracket 32 is pivotally coupled to the latch pivot 128 with the pivot shaft 130 extending through the pivot hole 72 and through the passageway in the fourth Norton bushing 204. The recliner A-bracket 32 is spaced between the upper hook 126 and the shaft head 132 on the proximal end of the pivot shaft 130. In alternate embodiments, one or both of the shaft head 132 and the collar 134 of the latch pivot 128 may be formed on the latch pivot 128 or fixedly coupled to the latch pivot 128 after assembly of the closeout bracket 122, the lower hook 124, and the upper hook 126 with the pivot shaft 130 without altering the scope of the present invention.

Depicted in Figures 3, 6, and 7, the latch assembly 120 also includes a locking cam 206 pivotally coupled between the upper hook 126 and the closeout bracket 122 by a free pivot to move between a latched condition engaged with the lower and upper hooks 124, 126 and an unlatched condition disengaged from the lower and upper hooks 124, 126. Shown in Figure 6, the locking cam 206 has a generally S-shape with a locking portion 208 offset from a tail portion 210 and extending in opposing directions. In addition, the locking cam 206 includes a cam pivot hole 212 extending laterally through a lower portion of the locking cam 206 and a cable hole 214 extending laterally through the tail portion 210. Referring to Figure 9, the locking portion 208 includes opposing lower and upper side walls 216, 218 having a lower cam wedge profile 220 adjacent a lower cam locking profile 222 extending along the lower side wall 216 and an upper cam wedge profile 224 adjacent an upper cam locking profile 226 extending along the upper side wall 218. The lower and upper cam wedge profiles 220, 224 are configured to frictionally engage with the lower and upper wedge profiles 164, 186, respectively, when the locking cam 206 is in the latched condition with the lower and upper hooks 124, 126, as shown in Figure 9. The wedging of the cam wedge profiles 220, 224 against the respective wedge profiles 164, 186 on the lower and upper hooks 124, 126 keep the lower and upper hooks 124. 126 firm against the striker 22 during normal use to prevent buss, squeak, and rattle (BSR). Referring to Figure 10, if a dynamic impact event occurs, the locking cam 206 may back off the wedge profiles 164, 186 and cause the lower and upper cam locking profiles 222, 226 to engage with the lower and upper locking profiles 166, 188, respectively, on the lower and upper hooks 124, 126.

Shown in Figures 6 and 7, the latch assembly 120 also includes a locking cam pivot 228 pivotally coupling the locking cam 206 to the closeout bracket 122 and to the upper hook 126. Referring to Figure 7, the locking cam pivot 228 includes a boss 230 extending axially from a distal end of a generally cylindrical shaft 232. Spaced apart proximal and distal channels 234, 236 extend circumferentially around the cylindrical shaft 232. The locking cam pivot 228 extends through the tab pivot hole 192 in the upper hook 126 with the upper hook 126 axially aligned with the proximal channel 234. The locking cam pivot 228 also extends through the cam pivot hole 140 in the closeout bracket 122 with the closeout bracket 122 axially aligned with the distal channel 236 and the boss 230 projecting laterally away from the closeout bracket 122. In addition, the locking cam pivot 228 extends through the cam pivot hole 212 in the locking cam 206 with the locking cam 206 aligned with the cylindrical shaft 232 and spaced between the closeout bracket 122 and the upper hook 126. In certain embodiments, one or more retention features 238 may be assembled with or integrally formed in the locking cam pivot 228 and configured to retain the closeout bracket 122, the locking cam 206, and the upper hook 126 assembled with the locking cam pivot 228.

Depicted in Figure 3, the latch assembly 120 also includes a latch position spring 240. The latch position spring 240 is operatively coupled between the recliner A-bracket 32 and the closeout bracket 122 to rotationally bias the upper hook 126 in a clockwise direction (arrow 242 in Figure 3) towards an engaged condition with the locking cam 206. The latch position spring 240 also rotationally biases the stop tab 168 on the lower hook 124 towards the hook rotation hard stop 78 on the recliner A-bracket 32. In addition, the latch position spring 240 rotationally biases the recliner A-bracket 32 in a counterclockwise direction (arrow 242') towards the upright rotational position (Figure 3). Referring to Figure 6, the latch position spring 240 is a coil spring with a passageway 244 extending laterally therethrough and having opposing inner and outer hook ends 246, 248. Shown in Figure 8, the latch pivot 128 extends through the passageway 244 in the latch position spring 240 with the collar 134 axially aligned with the latch position spring 240. As best shown in Figure 2, the outer hook end 248 is frictionally engaged with the retention slot 76 in the recliner A-bracket 32 and the inner hook end 246 is frictionally engaged with the long pin 152 projecting from the closeout bracket 122.

Referring to Figures 2, 6, and 8, the latch assembly 120 also includes a spring isolator 250 having a disk-shape and a passageway 252 extending therethrough. The spring shaft 136 of the latch pivot 128 is inserted through the passageway 252 in the spring isolator 250 such that the spring isolator 250 is adjacent the latch position spring 240.

Shown in Figure 3, the latch assembly 120 also includes a hook engagement spring 254 operatively coupled between the upper hook 126 and the lower hook 124 to rotationally bias the lower and upper hooks 124, 126 towards an engaged condition with the striker 22, as illustrated by arrows 256, 258. The hook engagement spring 254 also biases the stop nib 174 towards the hook-to-hook hard stop 200 in the stop slot 198. In addition, the hook engagement spring 254 in combination with the latch position spring 240 biases the stop tab 168 in a clockwise direction (arrow 242) towards the hook rotation hard stop 78. Referring to Figures 6 and 8, the hook engagement spring 254 is a coil spring with a passageway 260 extending laterally therethrough and having upper and lower bent ends 262. 264. The hook engagement spring 254 is positioned on the latch pivot 128 with the spring shaft 136 extending through the passageway 260 with the spring isolator 250 spaced between the hook engagement spring 254 and the latch position spring 240. Depicted in Figure 2, the upper bent end 262 of the hook engagement spring 254 frictionally engages the upper spring notch 194 in the upper hook 126 and the lower bent end 264 frictionally engages the lower spring notch 172 in the lower hook 124. Referring to Figure 6 and 8, the latch assembly 120 also includes a first retaining clip 266 fixedly coupled to the distal end of the spring shaft 136 and configured to retain the latch position spring 240, the spring isolator 250, and the hook engagement spring 254 assembled with the latch pivot 128.

Shown in Figure 3, the latch assembly 120 also includes a locking cam spring 268 operatively coupled between the locking cam 206 and the closeout bracket 122 to rotationally bias the locking cam 206 towards an engaged condition with the upper and lower hooks 126, 124. Depicted in Figures 6 and 7, the locking cam spring 268 is a coil spring with a passageway 270 extending laterally therethrough and having upper and lower spring ends 272, 274. The boss 230 of the locking cam pivot 228 extends through the passageway 270 in the locking cam spring 268 with the locking cam spring 268 adjacent the closeout bracket 122. Referring to Figure 3, the upper spring end 272 is frictionally engaged with a front portion of the locking cam 206. In addition, the lower spring end 274 is frictionally engaged with the short pin 154 attached to the closeout bracket 122. Shown in Figures 3, 6, and 7, the latch assembly 120 also includes a second retaining clip 276 fixedly coupled to the distal end of the boss 230 and configured to retain the locking cam spring 268 assembled with the locking cam pivot 228.

Referring to Figures 6 and 17, the latch assembly 120 also includes a locking cam release cable assembly 278 comprising a cam release cable 280 (i.e.. a Bowden cable) operatively coupled between a fold flat release handle (not shown) located on a top end 282 (Figure 1) of the seat back 12 and the locking cam 206 for actuating and releasing the locking cam 206 from engagement with the lower and upper hooks 124. 126. The locking cam release cable assembly 278 also includes an end fitting 284 fixedly coupled to a proximal end of a cable conduit 286 and fixedly coupled to the closeout tab 148 on the closeout bracket 122. The cam release cable 280 extends longitudinally through a passageway in the cable conduit 286, through a passageway in the end fitting 284, and through the mounting hole 150 in the closeout bracket 122. The cam release cable 280 has a proximal end 288 fixedly coupled to the cable hole 214 in the locking cam 206 and a distal end (not shown) operatively coupled to the fold flat release handle. Actuating the fold flat release handle applies tension to the cam release cable 280 (arrow 292) and causes the locking cam 206 to rotate clockwise (arrow 294) to an unlocked position, which disengages the locking cam 206 from the lower and upper hooks 124, 126.

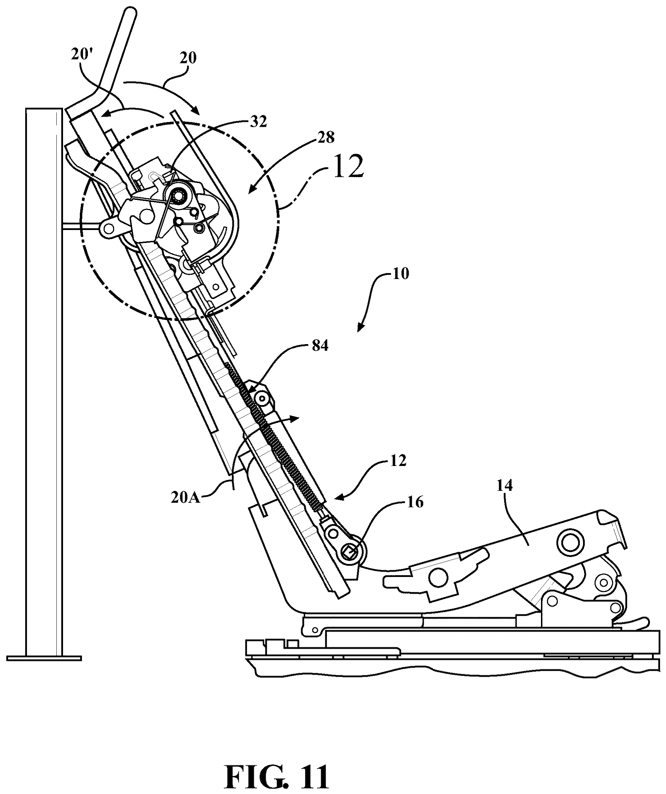

The seat assembly 10 can be repositioned upon demand by the occupant between upright positions including the design position (Figures 1 and 11) and the full recline position (Figure 15) by adjusting the high latch 28 while the latch assembly 120 is pivotally latched to the striker 22. In one embodiment, the high latch 28 is configured to allow 10 degrees of recline for the seat back 12 from the design position. It will be appreciated that the high latch 28 may be configured to allow more or less than 10 degrees of recline without altering the scope of the present invention. The rotational placement of the disc recliner 30 may allow for more than 50 recline positions over the 10 degree recline range, which allows the occupant "micro" adjustments in recline angle for optimum personal comfort. In addition, the seat assembly 10 can be repositioned upon demand by the occupant from any one of the upright positions to a fold flat position (Figure 21) when the high latch 28 is decoupled from the striker 22. Further, the seat assembly 10 can be repositioned upon demand by the occupant from the fold flat position back to the design position.

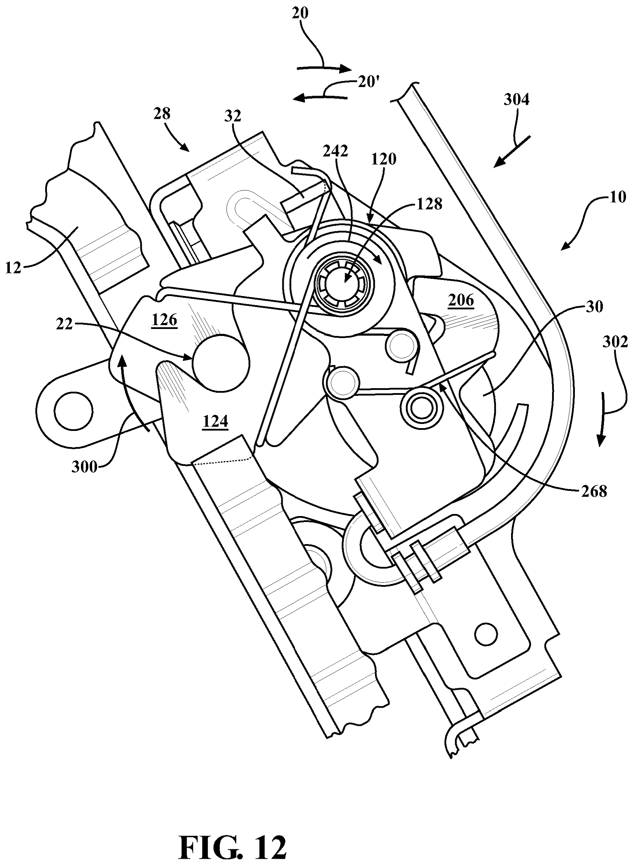

Referring to Figures 11 and 12, the seat back 12 is initially in the design position with the recliner A-bracket 32 in the upright rotational position, the disc recliner 30 in the locked condition, and the release lever 44 unactuated. The latch assembly 120 is in the latched condition with the striker 22. The locking cam 206 is engaged with the lower and upper hooks 124, 126 under a spring-loaded condition due to the locking cam spring 268. In addition, the latch assembly 120 is pivotably coupled to the recliner A-bracket 32 through the latch pivot 128. The disc recliner 30 locks the rotation of the recliner A-bracket 32 relative to the seat back 12 while the disc recliner 30 is in the locked condition. Also, the fold flat release cable assembly 84 spring-biases the recliner A-bracket 32 in the rearward direction (arrow 242') towards the upright rotational position. The seat back 12 may be spring-biased forward (arrow 20A) relative to the free pivots 16 towards the design position by the seat back spring 18 (Figure 1). Forward rotation of the seat back 12 is restricted by the high latch 28 since the latch assembly 120 is coupled to the striker 22 and the disc recliner 30 is in the locked condition.

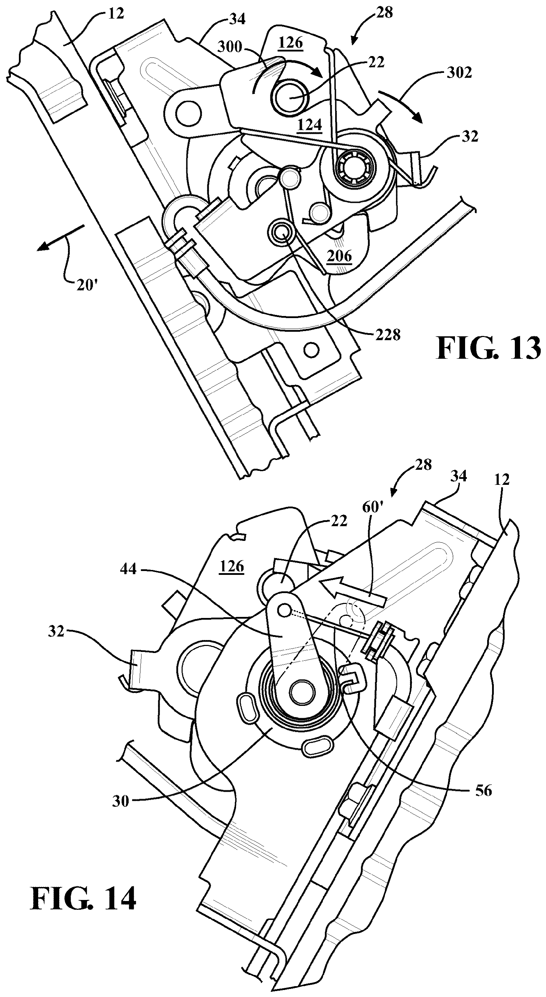

Referring to Figure 4, to move the seat assembly 10 from the design position to the full recline position, the occupant actuates the adjustment lever (not shown) which actuates the disc release cable 56 causing the release lever 44 to rotate the cam 40 (arrow 60) to the unlocked condition 44' which unlocks the disc recliner 30. Depicted in Figures 12 and 13, with the disc recliner 30 in the unlocked condition, the latch assembly 120 is allowed to freely pivot about the vehicle-mounted striker 22 (arrow 300) and the recliner A-bracket 32 is allowed to freely pivot about the disc recliner 30 (arrow 302). The seat back 12 is allowed to recline due to the disc recliner 30 being in the unlocked condition in combination with the seat back free pivots 16. Next, the occupant applies rearward loading (arrow 304) on the seat back 12 while the adjustment lever is actuated and the disc recliner 30 is unlocked. The occupant may apply rearward loading (arrow 304) onto the seat back 12 using the occupant's torso or hand, as nonlimiting examples. The rearward loading (arrow 304) overcomes the forward-biasing force 20A in the forward direction (arrow 20) of the optional seat back spring 18 and rotates the seat back 12 rearwards (arrow 20') about the free pivots 16. Referring to Figure 16, the extension spring 116 extends as the seat back 12 is pivoted towards the full recline position to accommodate an increase in the length of the fold flat cable 114 without actuating the fold flat release cable assembly 84.

Depicted in Figure 13, the latch assembly 120 being pivotably coupled to the recliner A-bracket 32 allows the lower and upper hooks 124, 126 to pivot clockwise around the striker 22 (arrow 300) without binding as the recliner A-bracket 32 rotates forward (arrow 302) towards the full recline position. The locking cam 206 is fixed relative to the lower and upper hooks 124, 126 and thus moves with the lower and upper hooks 124, 126 but does not rotate about the locking cam pivot 228. The rearward rotation (arrow 20') of the seat back 12 moves the seat assembly 10 to the full recline position shown in Figure 15. The rearward rotation (arrow 20') of the seat back 12 is limited by a hard stop (not shown) on the recliner A-bracket 32 and/or the seat back 12. Shown in Figure 14, after the seat back 12 is in the full recline position, the occupant releases the adjustment lever (not shown) allowing the release lever 44 to rotate (arrow 60') repositioning the disc recliner 30 to the locked condition which locks the seat back 12 into the new seating position. The occupant may selectively position the seat back 12 at any angle between the full recline position and the design position. In one embodiment, the disc recliner 30 rotates about 114 degrees between the design position and the full recline position, however the amount of rotation may vary without altering the scope of the present invention. Further, the disc recliner 30 may have a locking increment, such as about 1.8 degrees, resulting in approximately 63 locking positions between the design position and the full recline position which allows for micro-adjustments throughout the recline range.

Depicted in Figure 16, to return the seat assembly 10 to the design position from the full recline position, the occupant actuates a return-from-recline function. In one embodiment, the occupant actuates the retum-from-recline function by actuating the adjustment lever (not shown). Actuating the adjustment lever unlocks the disc recliner 30 by causing the release lever 44 to rotate the cam 40 to the unlocked condition. Next, the occupant leans forward and the force (arrow 119') in the extension spring 116 via the fold flat cable 114 causes the disc recliner 30 and the attached recliner A-bracket 32 to rotate counterclockwise (arrow 302') to drive the seat back 12 forward (arrow 20). In addition, the forward-biasing force (arrow 20A) of the seat back spring 18 assists in rotating the seat back 12 forward (arrow 20) about the free pivots 16. The forward-biasing force (arrow 20A) of the seat back spring 18 in combination with the forward-biasing force (arrow 242) of the latch position spring 240 causes the latch assembly 120 to pivot counterclockwise (arrow 300') about the striker 22 as the seat back 12 rotates in the forward direction (arrow 20) about the free pivots 16. The latch assembly 120 pivots about the striker 22 as the recliner A-bracket 32 rotates to prevent binding of the latch assembly 120 with the striker 22 as the seat back 12 rotates. The occupant releases the adjustment lever locking the disc recliner 30 in place when the seat assembly 10 is in the desired position.

Referring to Figure 17, to move the seat assembly 10 from one of the upright positions to the fold flat position, the occupant actuates the fold flat feature by actuating a fold flat release handle (not shown) applying tension (arrow 292) to the cam release cable 280. The tension (arrow 292) in the cam release cable 280 causes the locking cam 206 to rotate clockwise (arrow 294) to an unlocked position disengaged from the lower and upper hooks 124, 126. There is no hook motion in response to the locking cam 206 disengaging from the lower and upper hooks 124, 126 since the lower and upper hooks 124, 126 are spring-loaded together by the hook engagement spring 254. Alternatively, the occupant may actuate the fold flat feature by actuating a fold flat release strap, a power actuator, and the like without varying the scope of the present invention. In alternate embodiments, the latch assembly 120 may include a hold open feature (not shown) for the locking cam 206 in order to allow re-engagement of the lower and upper hooks 124. 126 to the striker 22 when returning from the fold flat position. An exemplary hold open feature may include a kickstand-type feature that reacts with the striker 22 when returning from the fold flat position.

Depicted in Figure 17, the disengagement of the locking cam 206 from the lower and upper hooks 124, 126 allows the seat back spring 18 to pivot the seat back 12 forward (arrow 20) which causes the C-shaped slot 158, 180 of the lower and upper hooks 124, 126 to frictionally engage with the striker 22. The forward biasing force (arrow 20A) of the seat back spring 18 begins to rotate the seat back 12 forward (arrow 20) about the free pivots 16. In an alternate embodiment lacking a seat back spring 18, the occupant manually pivots the seat back 12 forward (arrow 20) until the seat back 12 is rotated forward past vertical. When the striker 22 is brought into contact with the inner cam surfaces 159, 181 of the C-shaped slots 158, 180 as the seat back 12 is pivoted in the forward direction 20, the striker 22 applies a load onto the lower and upper hooks 124, 126 causing the lower and upper hooks 124, 126 to rotate (arrows 256', 258') away from the striker 22.

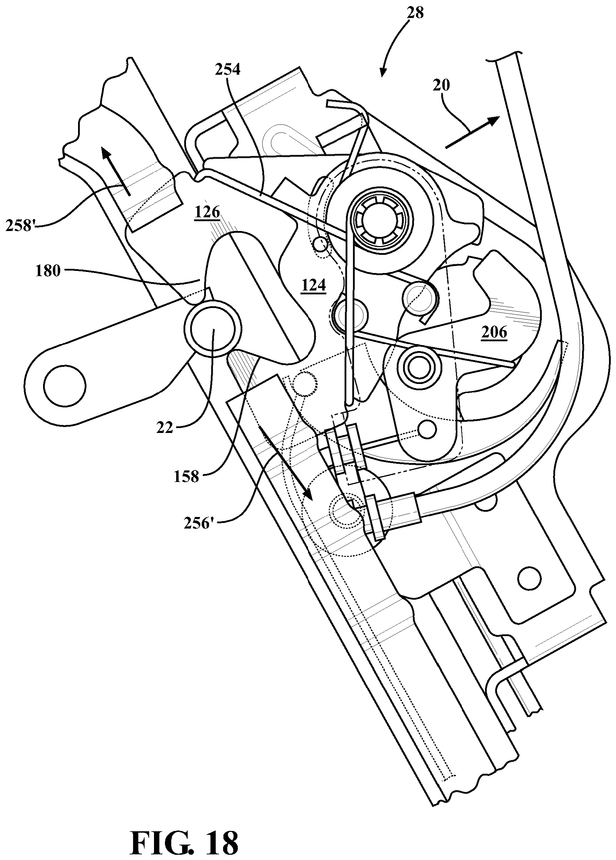

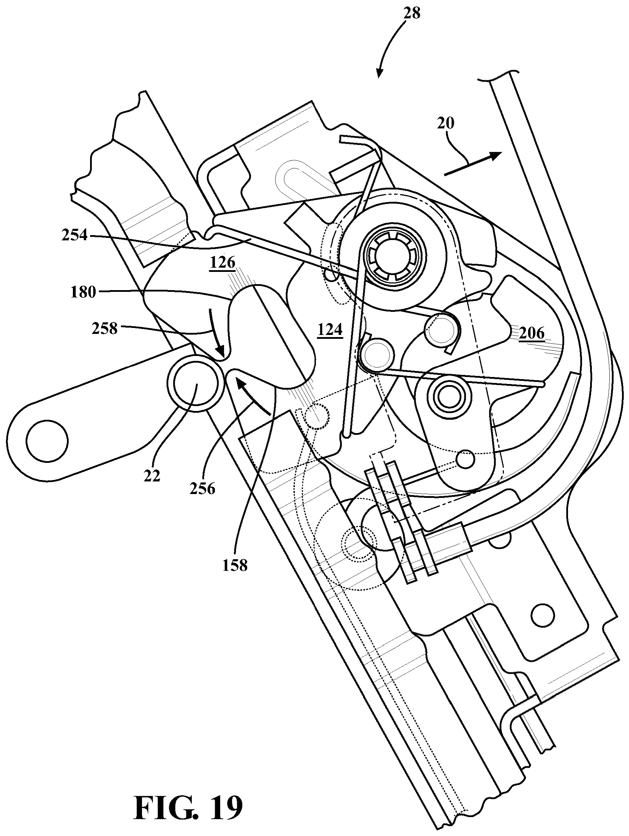

Shown in Figure 18, after the lower and upper hooks 124, 126 contact the striker 22, the additional forward rotation (arrow 20) of the seat back 12 causes the lower and upper hooks 124, 126 to pivot away (arrows 256', 258') from the striker 22, allowing the striker 22 to exit the C-shaped slots 158, 180. Depicted in Figure 19, as the seat back 12 continues to rotate forward 20 and the striker 22 disengages from the lower and upper hooks 124, 126, the hook engagement spring 254 rotates the lower and upper hooks 124, 126 towards each other (arrows 256, 258). After the striker 22 has disengaged from the C-shaped slots 158, 180 and the lower and upper hooks 124, 126 bypass the striker 22, the high latch 28 positions the lower and upper hooks 124, 126 in such a way that the lower and upper hooks 124, 126 will cam/ramp off the striker 22 allowing the high latch 28 to re-engage to the striker 22 when returning from the fold flat position.

Referring to Figure 20, in order to reposition the lower and upper hooks 124. 126. the hook engagement spring 254 rotates the lower and upper hooks 124, 126 towards each other until the stop nib 174 frictionally engages with the hook-to-hook hard stop 200 on the upper hook 126. Once the latch assembly 120 has fully bypassed the striker 22, the latch position spring 240 rotates the lower and upper hooks 124, 126 clockwise (arrow 242) about the latch pivot 128 towards the recliner A-bracket 32 causing the stop tab 168 to frictionally engage with the hook rotation hard stop 78. The hook-to-hook hard stop 200 and the hook rotation hard stop 78 keep the lower and upper hooks 124, 126 in the proper relative position to cam back open and re-attach to the striker 22 when the seat back 12 returns from the fold flat position.

Depicted in Figure 21, if the fold-flat function is initiated from the full recline position or incremental positions between the full recline and the design positions where the recliner A-bracket 32 is not in the design rotational position, the disc recliner 30 automatically unlocks when the seat back 12 is rotated forward beyond a preset seat back angle (e.g., angle 306). The rearward-biasing force (arrow 119') of the fold flat cable 114 on the recliner A-bracket 32 then causes the recliner A-bracket 32 to rotate in the rearward direction (arrow 302') to the upright rotational position. After the seat back 12 is rotated forward (arrow 20) past vertical, gravity rotates the seat back 12 towards the fold flat position. The seat back 12 rotates forward until the seat back 12 overlies the seat cushion 14. The rotation of the recliner A-bracket 32 to the upright rotational position assures that the seat assembly 10 is below a flat load floor line 308 when the seat back 12 is rotated to overlie the seat cushion 14.

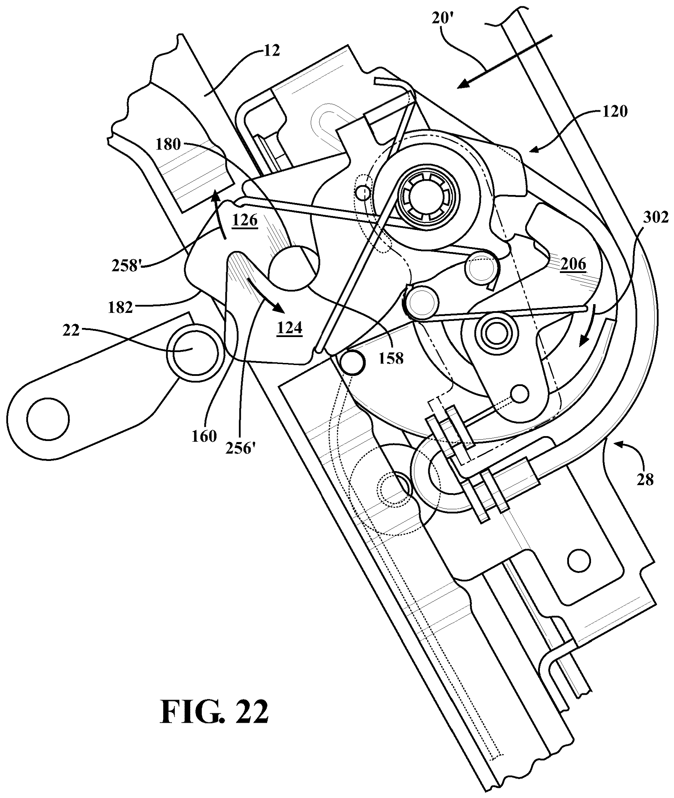

Referring to Figures 21-25. to return the seat assembly 10 to the design position from the fold flat position, the occupant rotates the seat back 12 rearwards (arrow 20') about the free pivots 16. The return force 119' due to the fold flat cable 114 wrapping around the cammed guide 86 urges the disc recliner 30 to return to the design position as the seat back 12 is rotated rearward towards the design position. The disc recliner 30 is automatically relocked when the seat back 12 is rotated rearward (arrow 20') past the exemplary preset seat back angle 306. Depicted in Figures 22-25. immediately following first contact between one of the lower and upper hooks 124, 126 and the striker 22, the high latch 28 aligns itself and cams/ramps back over the striker 22 to the locked position. In the embodiment shown in Figure 22, the lower hook 124 makes first contact with the striker 22 when returning from the fold flat position. In an alternate embodiment, the upper hook 126 may make first contact with the striker 22. In still another embodiment, both the lower and upper hooks 124, 126 may simultaneously contact the striker 22 for re-engagement.

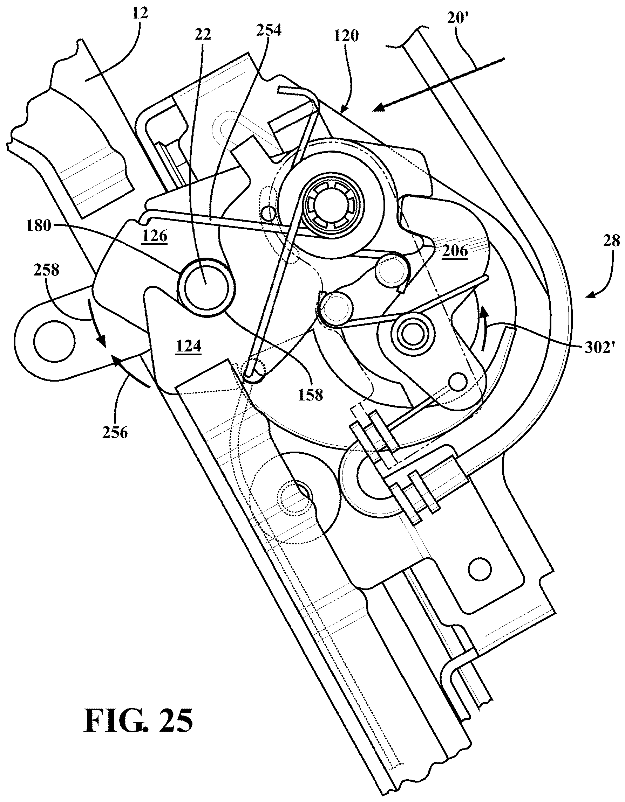

In more detail, the load applied by the striker 22 on the outer cam surfaces 160, 182 on the lower and upper hooks 124, 126 as the seat back 12 rotates rearward (arrow 20') causes the lower hook 124 to rotate in the counterclockwise direction (arrow 256') and the upper hook 126 to rotate in the clockwise direction (arrow 258') until the striker 22 enters the C-shaped slots 158, 180 in the lower and upper hooks 124, 126. As shown in Figure 25, the hook engagement spring 254 causes the lower and upper hooks 124, 126 to rotate towards each other (arrows 256, 258) until the lower and upper hooks 124, 126 are in the latched condition with the striker 22.

Once the high latch 28 is fully engaged with the striker 22, the locking cam hold-open feature (not shown) allows the locking cam 206 to re-engage with the lower and upper hooks 124, 126, locking the latch assembly 120 to the striker 22. When tension is released from the cam release cable 280, the locking cam spring 268 pivots the locking cam 206 (arrow 302') towards an engaged condition with the lower and upper hooks 124, 126.

As discussed above, the seat assembly 10 of the present invention includes a high latch 28 having a pivoting latch assembly 120 and a disc recliner 30. The seat assembly 10 is repositionable between the full recline and design positions while the high latch 28 is coupled to the striker 22. Further, the high latch 28 can be decoupled from the striker 22 allowing the seat assembly 10 to be repositioned from any of the upright positions to a fold flat position.

The invention has been described in an illustrative manner, and it is to be understood that the terminology, which has been used, is intended to be in the nature of words of description rather than of limitation. Many modifications and variations of the present invention are possible in lamp of the above teachings. It is, therefore, to be understood that within the scope of the appended claims, the invention may be practiced other than as specifically described.
The following is a numbered list of aspects of the invention:
1. A seat assembly (10) for use in an automotive vehicle, the seat assembly (10) comprising:
   a seat cushion (14) adapted to be coupled to a floor of the automotive vehicle;
   a seat back (12) pivotably coupled to the seat cushion (14);
   a striker (22) adapted to be fixedly secured to a support wall in the automotive vehicle;
   a recliner bracket (32, 34) pivotally coupled to the seat back (12); and
   a latch assembly (120) pivotally coupled to the recliner bracket (32, 34) and pivotally coupled to the striker (22), wherein pivotal movement of the recliner bracket (32, 34) relative to the seat back (12) causes the latch assembly (120) to pivot about the striker (22) and the seat back (12) to pivot relative to the seat cushion (14) between a design position and a full recline position.
2. The seat assembly (10) as set forth in aspect 1, further comprising a disc recliner (30) operatively coupled between the recliner bracket (32, 34) and the seat back (12) to pivotally couple the recliner bracket (32, 34) to the seat back (12), wherein the disc recliner (30) is selectively repositionable between an unlocked condition wherein the recliner bracket (32, 34) is pivotable relative to the seat back (12) and a locked condition wherein the recliner bracket (32, 34) is pivotally locked to the seat back (12).
3. The seat assembly (10) as set forth in aspect 2, wherein the latch assembly (120) is operable between a latched condition and an unlatched condition, wherein in the unlatched condition, the latch assembly (120) is able to disengage from the striker (22) to allow pivotal movement of the seat back (12) to a fold flat position overlying the seat cushion (14).
4. The seat assembly (10) as set forth in aspect 3, further comprising a fold flat release cable assembly (84) including an extension spring (116) operatively coupled between the recliner bracket (32, 34) and the seat back (12) biasing the recliner bracket (32, 34) in a rearward direction to an upright rotational position.
5. The seat assembly (10) as set forth in aspect 4, the fold flat release cable assembly (84) further comprising a cammed guide (86) fixedly coupled to the recliner bracket (32, 34) and a fold flat cable (114) operatively coupled between the cammed guide (86) and the extension spring (116).
6. The seat assembly (10) as set forth in aspect 5, wherein when the seat back (12) is pivoted forward past a preset seat back angle, the disc recliner (30) automatically unlocks and the extension spring (116) pivots the recliner bracket (32, 34) to the upright rotational position.
7. The seat assembly (10) as set forth in aspect 3, wherein the latch assembly (120) further comprises a lower hook (124) and an upper hook (126) pivotally coupled to the recliner bracket (32, 34) by a latch attachment pivot (128) wherein pivotal movement of the recliner bracket (32, 34) relative to the seat back (12) causes the lower hook (124) and the upper hook (126) to pivot about the striker (22).
8. The seat assembly (10) as set forth in aspect 7, wherein the seat back (12) is pivotally coupled to the seat cushion (14) by a free pivot.
9. The seat assembly (10) as set forth in aspect 7, wherein the latch assembly (120) further comprises a locking cam (206) pivotally coupled to the upper hook (126) and pivotal between the latched condition engaged with the lower hook (124) and the upper hook (126) and the unlatched condition disengaged from the lower hook (124) and the upper hook (126).
10. The seat assembly (10) as set forth in aspect 9, wherein the latch assembly (120) further comprises:
   a latch closeout bracket (122) pivotally coupled to the recliner bracket (32, 34) by the latch attachment pivot (128); and
   a locking cam spring (268) operatively coupled between the latch closeout bracket (122) and the locking cam (206) biasing the locking cam (206) towards the latched condition.
11. The seat assembly (10) as set forth in aspect 10, wherein the latch assembly (120) further comprises a latch position spring (240) operatively coupled between the recliner bracket (32, 34) and the latch closeout bracket (122).
12. The seat assembly (10) as set forth in aspect 11, wherein the latch assembly (120) further comprises a hook engagement spring (254) operatively coupled between the lower hook (124) and the upper hook (126) rotationally biasing the lower hook (124) and the upper hook (126) towards one another.
13. The seat assembly (10) as set forth in aspect 12, wherein the recliner bracket (32, 34) includes a hook rotation hard stop (78) restricting rotational movement of the lower hook (124) relative to the recliner bracket (32, 34).
14. The seat assembly (10) as set forth in aspect 13, wherein the latch assembly (120) further includes a hook-to-hook hard stop (200) between the lower hook (124) and the upper hook (126) restricting relative rotation of the lower hook (124) and the upper hook (126).
15. The seat assembly (10) as set forth in aspect 14, wherein the lower hook (124) includes a first wedge profile (164), the upper hook (126) includes a second wedge profile (186), and the locking cam (206) includes first and second cam wedge profiles (220, 224), wherein the first and second wedge profiles (164, 186) frictionally engage with respective first and second cam wedge profiles (220, 224) when the locking cam (206) is in the latched condition with the lower hook (124) and the upper hook (126).
16. The seat assembly (10) as set forth in aspect 15, wherein the lower hook (124) includes a first locking profile (166), the upper hook (126) includes a second locking profile (188), and the locking cam (206) includes first and second cam locking profiles (222, 226), wherein the first and second locking profiles (166, 188) frictionally engage with respective first and second cam locking profiles (222, 226) when the locking cam (206) is in the latched condition with the lower hook (124) and the upper hook (126).

## Claims

1. A high latch (28) for use in a seat assembly (10) in an automotive vehicle, the high latch (28) comprising:
a recliner A-bracket (32);
a recliner B-bracket (34);
a disc recliner (30) operatively coupled between the recliner A-bracket (32) and the recliner B-bracket (34) to pivotally couple the recliner A-bracket (32) to the recliner B-bracket (34), wherein the disc recliner (30) is selectively repositionable between an unlocked condition wherein the recliner A-bracket (32) is pivotable relative to the recliner B-bracket (34) and a locked condition wherein the recliner A-bracket (32) is pivotally locked to the recliner B-bracket (34); and
a latch assembly (120) pivotally coupled to the recliner A-bracket (32) and adapted to be pivotally coupled to a striker (22) in the automotive vehicle.

2. The high latch (28) as set forth in claim 1, wherein the latch assembly (120) is operable between a latched condition and an unlatched condition, wherein in the unlatched condition, the latch assembly (120) is able to disengage from the striker (22).

3. The high latch (28) as set forth in claim 2, further comprising a fold flat release cable assembly (84) operatively coupled to the recliner A-bracket (32) biasing the recliner A-bracket (32) in a rearward direction to an upright rotational position.

4. The high latch (28) as set forth in claim 3, further comprising a cammed guide (86) fixedly coupled to the recliner A-bracket (32) and fixedly coupled to the fold flat release cable assembly (84).

5. The high latch (28) as set forth in claim 2, further comprising a lower hook (124) and an upper hook (126) pivotally coupled to the recliner A-bracket (32) by a latch attachment pivot (128).

6. The high latch (28) as set forth in claim 5, further comprising a locking cam (206) pivotally coupled to the upper hook (126) and pivotal between the latched condition engaged with the lower hook (124) and the upper hook (126) and the unlatched condition disengaged from the lower hook (124) and the upper hook (126).

7. The high latch (28) as set forth in claim 6, further comprising:
a latch closeout bracket (122) pivotally coupled to the recliner A-bracket (32) by the latch attachment pivot (128); and
a locking cam spring (268) operatively coupled between the latch closeout bracket (122) and the locking cam (206) biasing the locking cam (206) towards the latched condition.

8. The high latch (28) as set forth in claim 7, further comprising a latch position spring (240) operatively coupled between the recliner A-bracket (32) and the latch closeout bracket (122).

9. The high latch (28) as set forth in claim 8, further comprising a hook engagement spring (254) operatively coupled between the lower hook (124) and the upper hook (126) rotationally biasing the lower hook (124) and the upper hook (126) towards one another.

10. The high latch (28) as set forth in claim 9, wherein the recliner A-bracket (32) includes a hook rotation hard stop (78) restricting rotational movement of the lower hook (124) relative to the recliner A-bracket (32).

11. The high latch (28) as set forth in claim 10, further comprising a hook-to-hook hard stop (200) between the lower hook (124) and the upper hook (126) restricting relative rotation of the lower hook (124) and the upper hook (126).

12. The high latch (28) as set forth in claim 11, wherein the lower hook (124) includes a first wedge profile (164), the upper hook (126) includes a second wedge profile (186), and the locking cam (206) includes first and second cam wedge profiles (220, 224), wherein the first and second wedge profiles (164, 186) frictionally engage with respective first and second cam wedge profiles (220, 224) when the locking cam (206) is in the latched condition with the lower hook (124) and the upper hook (126).

13. The high latch (28) as set forth in claim 12, wherein the lower hook (124) includes a first locking profile (166), the upper hook (126) includes a second locking profile (188), and the locking cam (206) includes first and second cam locking profiles (222, 226), wherein the first and second locking profiles (166, 188) frictionally engage with respective first and second cam locking profiles (222, 226) when the locking cam (206) is in the latched condition with the lower hook (124) and the upper hook (126).
